# FASCICULE DE BREVET EUROPEEN

(11) **EP 1 779 182 B1**
(45) Date de publication et mention de la délivrance du brevet: **02.04.2008**
(21) Numéro de dépôt: 05793570.2
(22) Date de dépôt: 22.07.2005
(51) Int. Cl.: G02B 27/22, H04N 13/00

(54) **PROCEDE ET DISPOSITIF DE VISION EN RELIEF SUR ECRAN**
BILDSCHIRM-RELIEFANZEIGEVERFAHREN UND -VORRICHTUNG
ON-SCREEN RELIEF VIEWING METHOD AND DEVICE

(30) Priorité: 22.07.2004 FR 0408127
(43) Date de publication de la demande: 02.05.2007
(73) Titulaire: Morales, Dalila, 53950 Louverne (FR); Rufa, Michel, 75014 Paris (FR)
(72) Inventeur: Morales, Dalila, 53950 Louverne (FR); Rufa, Michel, 75014 Paris (FR)
(74) Mandataire: Breese, Pierre
(86) Numéro de dépôt international: PCT/FR2005/001906
(87) Numéro de publication internationale: WO 2006/018522

(56) Documents cités:
- EP-B- 0 764 281
- US-A- 5 936 774
- US-A1- 2002 180 659

## Description

La présente invention concerne le domaine de la restitution permettant à un spectateur de percevoir une impression de relief, sans le recours à des lunettes spéciales.

On connaît, dans l'état de la technique, différentes solutions pour la visualisation d'images stéréoscopiques.

Une première solution fort ancienne consiste à soumettre à chaque oeil une image distincte, par exemple à l'aide d'un équipements d'observation assurant la séparation des deux images visualisées simultanément. Ces équipements ne permettent qu'une observation individuelle, à partir de supports d'images spécialement préparés pour l'équipement d'observation adapté.

L'holographie est une autre méthode connue d'enregistrement d'images qui permet la restitution en relief d'un objet en utilisant les interférences produites par deux faisceaux de lumière cohérente provenant généralement d'un laser. Le codage de la phase ainsi enregistrée sur la plaque photographique permet alors une telle reconstruction interférométrique.

Une des techniques nécessite la présence matérielle de l'objet au moment de la prise de vue, les dimensions de celui-ci ne pouvant être supérieures à celles du support photographique. Une deuxième technique, le stéréogramme, permet de s'affranchir de cette contrainte en associant stéréoscopie et holographie. En effet, en transférant une série de photographies bidimensionnelles de l'objet prises en respectant des conditions d'angle de vue, on peut par la suite les intégrer séquentiellement une par une pour créer un hologramme complet grâce une fente optique, partie intégrante de l'hologramme, qui amène à une sélection naturelle oeil droit / oeil gauche des dites images. Lors de sa fabrication, l'utilisation d'un écran à cristaux liquides permet une manipulation aisée des différentes images, notamment pour obtenir des stéréogrammes en couleurs et/ou animés.

On connaît en particulier le brevet US5712732 décrivant un appareil pour l'affichage d'une image auto-stéréoscopique comportant au moins deux vues en perspective d'une scène, comprenant une source de lumière ; un modulateur de lumière spatial (SLM) comportant une pluralité d'éléments modulateurs de lumière intermédiaires entre un observateur et la source de lumière ; et des moyens pour structurer la lumière de façon qu'une première vue en perspective de la scène soit observée par un oeil de l'observateur et qu'une deuxième vue en perspective de la scène soit observée par l'autre oeil de l'observateur, caractérisé en ce que lesdits moyens de structuration de lumière comportent un agencement de concentration de lumière, disposé entre la source de lumière et le SLM et comportant des éléments optiques convergents qui forment, d'une manière entrelacée pour les vues de l'image, un ensemble de concentrations de lumière verticalement séparées pour chaque vue, sensiblement mappé sur un ensemble respectif d'éléments du SLM.

Cette solution nécessite l'emploi d'équipements électro-optiques très coûteux.

Le document EP-B-0 764 281 décrit un élément optique holographique qui comprend au moins deux ensembles de régions, les régions de chaque ensemble étant différentes des régions de l'autre (des autres) ensemble(s) et étant imbriquées dans les régions de l'autre (des autres) ensemble(s) ou les chevauchant, cet élément étant conçu de sorte que la lumière incidente sur chaque ensemble de régions soit dirigée vers une zone de visualisation respective d'une pluralité de telles zones. L'élément optique holographique est généralement incorporé dans un dispositif d'affichage, tel qu'un dispositif d'affichage stéréoscopique.

L'invention concerne plus particulièrement le dispositif permettant de faire apparaître des images en relief sur un écran d'ordinateur ou de télévision, en exploitant les spécificités optiques de cette deuxième technique.

De ce fait, l'invention se place sur un terrain où d'autres procédés de visualisation en relief sur écran existent, notamment les procédés stéréoscopiques utilisant des lunettes à obturateurs électroniques, ou des lunettes filtrées (principalement rouge/vert) ou encore des procédés utilisant des réseaux lenticulaires qui sont apposés sur l'écran et qui exploitent une découpe fine de différentes prises de vues angulaires d'une même représentation.

L'invention vise à remédier aux inconvénients des solutions de l'art antérieur en évitant la gêne induite par le port de lunettes au regard des procédés existants, ainsi que la découpe stéréoscopique (ou panoramique) des images, nécessaire lorsqu'on utilise un réseau lenticulaire, sachant que ce dernier limite le champ de vision optimal et nuit à la qualité du relief.

L'invention vise également à permettre une vision en relief d'images (animées ou pas) en vues stéréoscopiques ou panoramiques, basée sur l'effet stéréoscopique, sans l'utilisation de lunettes et sans qu'il ne soit nécessaire de découper ou fragmenter celles-ci. Grâce à l'invention, chaque oeil de l'observateur peut voir séparément une même image globale vue par chacun d'eux sous un angle approprié, ce qui apporte un effet de relief avec un champ de vision qui peut varier suivant la manière dont on exploite la fenêtre holographique, objet de cette invention, qui permet cette visualisation.

A cet effet, l'invention concerne selon son acception la plus générale un système selon la revendication 1 pour la visualisation d'images stéréoscopiques et panoramiques comportant un écran d'affichage et un moyen de masquage séquentiel de l'écran d'affichage afin de permettre une vue sélective dudit écran par un oeil seulement d'un observateur, caractérisé en ce que ledit moyen de masquage étant constitué par un support transparent présentant au moins un réseau de diffraction qui forme une image virtuelle d'un cache opaque présentant une fenêtre transparente perpendiculaire à l'axe d'observation et positionnée dans un plan parallèle à l'écran d'affichage, la largeur de la fenêtre et la position du plan dans lequel est formé ladite fenêtre étant déterminé pour permettre l'observation par un oeil seulement de la totalité de la largeur de l'écran de visualisation, le système comportant en outre des moyens pour commander le changement de position de ladite image virtuelle de la fenêtre dans ledit plan de manière synchrone avec le changement d'image visualisée.

Le dispositif faisant l'objet de l'invention permet une vision en relief sur un écran et est constitué par un hologramme visible en lumière blanche d'une fente virtuelle, autrement dit d'une fenêtre holographique verticale transparente sur fond lumineux, en mouvement transversal devant celui-ci. Un seul oeil pourra voir l'image sur l'écran, l'autre n'apercevra qu'un fond lumineux servant de cache. Le mouvement transversal de la fente holographique pourra être provoqué par un changement d'angle de l'éclairage de l'hologramme.

Ainsi, dans le cadre d'une vision stéréoscopique, des couples d'images d'une séquence défileront sur l'écran, et grâce au dispositif d'éclairage de la plaque holographique transparente, la fente virtuelle se déplacera de manière synchronisée avec ces couples d'images, afin que l'image droite apparaisse sur l'écran lorsque la fenêtre holographique se trouve devant l'oeil droit et l'image gauche apparaisse lorsque la fenêtre holographique se trouve devant l'oeil gauche. Dans ce cas, la largeur de la fente sera idéalement égale à la moitié de la largeur de l'écran. Grâce toujours à la permanence rétinienne, l'observateur intégrera inconsciemment les deux vues et obtiendra du relief.

Dans le cas d'une vision panoramique, la fente sera plus étroite et le nombre de points de vue plus important. La quantité d'images et la vitesse de défilement seront plus élevées.

L'éclairage de l'hologramme pourra être réalisé avec une "barrette" de lampes à arc électrique, ou avec un halogène assisté d'un miroir pivotant, pilotés par l'horloge de l'ordinateur lui-même, dont la lumière sera réfléchie sur l'hologramme grâce à une barrette de miroirs, judicieusement orientés, placée en porte-à-faux devant l'écran.

Avantageusement, lesdites images animées sont formées de couples d'images droites et gauches.

De préférence, l'invention comporte au moins deux sources de lumière blanche éclairant le support, chacune activant la formation de l'une des fenêtres

Selon un mode de réalisation particulier, le moyen de masquage est constitué par un écran holographique appliqué sur écran de visualisation (cathodique, LCD, CCD ou autre).

Selon un autre mode de réalisation particulier, le moyen de masquage est constitué par un support holographique, autre qu'argentique.

Avantageusement, le moyen de masquage est constitué par un système utilisant un balayage transversal de l'éclairage d'une plaque holographique afin de permettre un déplacement synchronisé d'une fenêtre optique frontale.

Selon une autre variante, le moyen de masquage est constitué par un support holographique éclairé en transmission.

Avantageusement, le moyen de masquage est constitué par un support holographique éclairé en réflexion.

Selon un mode de réalisation particulier, le moyen de masquage est constitué par un support holographique formant une image holographique lumineuse.

Le système pour la visualisation d'images stéréoscopiques et panoramiques est caractérisé en ce que le moyen de masquage est activé par un éclairage autre qu'une source blanche (laser, LED, sources mono-chromatiques ou polychromatiques)

Selon une alternative, le moyen de masquage est activé par un système mécanique ou électronique de balayage d'une source lumineuse (barrettes de lampes flash, barrettes CCD utilisées comme obturateurs électroniques de lumière, miroirs pivotants, prismes tournants).

Le système selon l'invention est donc constitué par:
- Une fenêtre holographique verticale réalisée grâce à un hologramme sur un support argentique ou autre support holographique transparent, celui-ci étant placé devant l'écran. Pour fabriquer cette fente optique, il suffit de partir d'un Master d'une plaque rectangulaire bien réfléchissante ou très diffusante, suivant la géométrie optique utilisée pour sa création) sur laquelle on place une bande verticale noire. On utilisera une géométrie optique de création d'hologrammes par réflexion.
- Un système optique d'éclairage par balayage du dit hologramme permettant à ladite fenêtre de défiler suivant l'axe horizontal devant l'écran.
- Un traitement informatique des images pour que les différentes prises de vues stéréoscopiques ou panoramiques défilent de manière synchronisée avec la fenêtre holographique, à une vitesse telle qu'il y ait permanence rétinienne.

L'invention sera décrite plus en détail en références aux dessins dans lesquels:
- La figure 1 représente la création du master holographique de la fenêtre holographique.
- La figure 2 représente la création du transfert holographique de la fenêtre holographique pour qu'elle soit visible en lumière blanche.

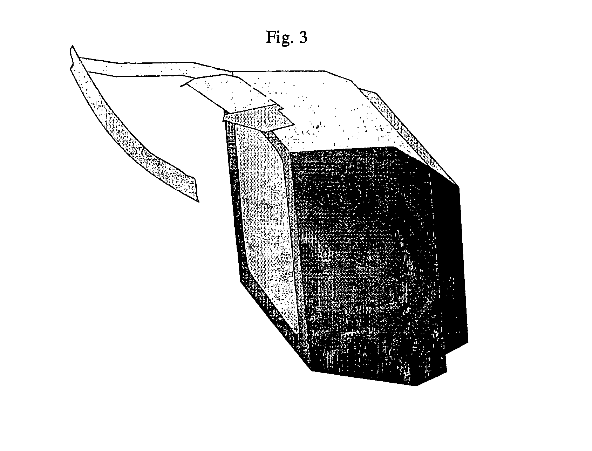

- La figure 3 représente le dispositif d'éclairage par balayage de ladite fenêtre lorsqu'elle est utilisée devant l'écran de l'ordinateur (ou téléviseur.

### CREATION DU MASTER DE LA FENETRE HOLOGRAPHIQUE

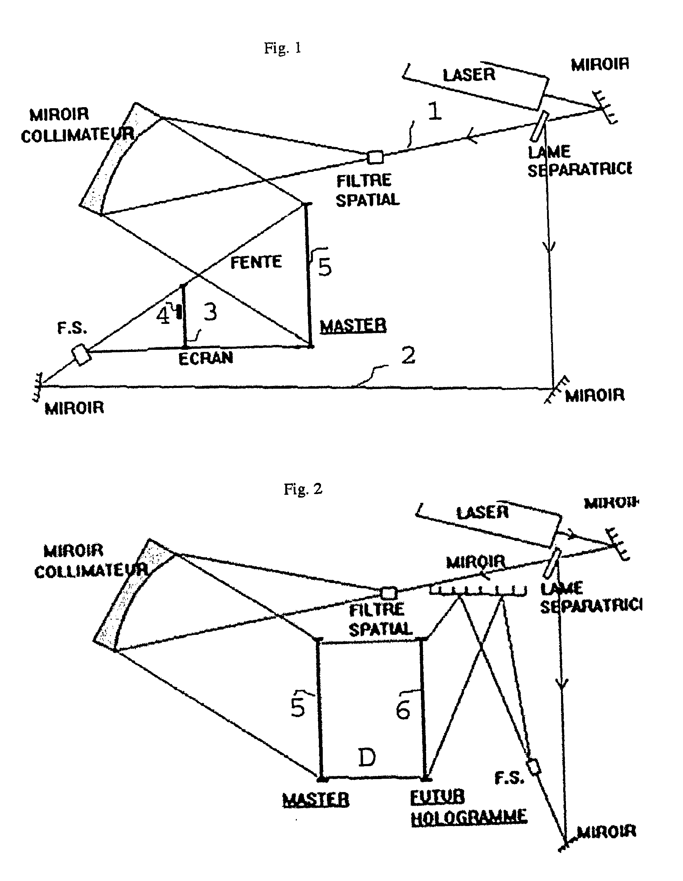

La première étape est celle d'obtenir un Master, tel que décrit (figure 1). Le Master est l'image originelle créée en lumière laser et uniquement visible avec ce dernier. Le procédé pour obtenir le dit Master est un procédé connu.

Le faisceau objet 2 éclaire, dans cette géométrie, un panneau rectangulaire diffusant 3 verre dépoli ou calque, sur lequel est placée une bande noire verticale 4 de largeur déterminée. Elle sera plus ou moins large inversement au nombre de vues panoramiques que l'on voudra utiliser, et occupera la moitié du panneau si l'on désire des vues stéréoscopiques. Sa largeur ne sera jamais inférieure au diamètre de la pupille de l'oeil. Le faisceau de référence 1 viendra directement éclairer la plaque holographique Master.

### CREATION DE L'HOLOGRAMME VISIBLE EN LUMIERE BLANCHE TRANSFERT DU MASTER)

Le Master est projeté sur le futur hologramme 6 en une seule fois. Cette étape est en fait la réalisation d'un hologramme à partir d'un hologramme. Si l'on s'arrête à cette étape, une fois l'hologramme développé, l'image est monochrome couleur définie par le développement chimique. L'on peut obtenir un hologramme polychromatique par des techniques connues. Le support reste transparent.

Le support de l'hologramme par réflexion 6 va être transparent, et lorsqu'il est éclairé par un faisceau d'une source ponctuelle de lumière blanche, l'image produite qui en résulte est un fond lumineux couvrant toute la surface du support, hormis une bande verticale qui, elle, sera transparente. Cette bande flotte à quelques dizaines de centimètres en avant du support. La distance n'est autre que celle utilisée lors de la fabrication du transfert, à savoir D. Ce support holographique 6 sera placé sur l'écran de l'ordinateur ou téléviseur.

D'après la géométrie utilisée lors de la création de l'hologramme, l'angle d'éclairage de celui-ci sera d'environ de 45° au moment de sa restitution, ce qui place la source à quelques centimètres face à l'hologramme, au-dessus ou en dessous. Pour ce qui est du positionnement suivant la parallaxe horizontale de la fenêtre optique qui va apparaître, il va varier selon la parallaxe horizontale donnée à la source d'éclairage.

### DISPOSITIF D'ECLAIRAGE

Par un balayage rapide de la plaque holographique par la source ponctuelle d'éclairage suivant sa parallaxe horizontale, il est aisé de matérialiser séquentiellement la fenêtre optique en différentes positions. L'oeil n'aura une observation du contenu total de l'affichage du moniteur de visualisation qu'à travers cette fenêtre. A tout moment, l'oeil gauche et l'oeil droit n'auront pas la même observation, puisque les images qui vont défiler sur l'écran vont être séquentiellement, et de manière synchronisée avec le balayage de la fenêtre, des vues sous différents angles d'un même objet, animé ou pas. Le balayage doit être suffisamment rapide pour qu'il y ait permanence rétinienne. Pour le balayage de la source d'éclairage, un cristal biréfringent, ou un miroir mobile, placé à sa sortie de celle-ci fera l'affaire. Un miroir frontal distribuera la lumière sur la globalité de l'hologramme. Le balayage de tout l'hologramme se fera au moins 24 fois par seconde et sera synchronisé de manière électronique avec les images qui défilent.

## Revendications

1. - Système pour la visualisation d'images, animées ou pas, stéréoscopiques et panoramiques comportant un écran d'affichage et un moyen de masquage séquentiel de l'écran d'affichage afin de permettre une vue sélective dudit écran par un oeil seulement d'un observateur, **caractérisé en ce que** ledit moyen de masquage étant constitué par un support transparent présentant au moins un réseau de diffraction qui forme une image virtuelle d'un cache opaque présentant une fenêtre transparente perpendiculaire à l'axe d'observation et positionnée dans un plan parallèle à l'écran d'affichage, la largeur de la fenêtre et la position du plan dans lequel est formé ladite fenêtre étant déterminé pour permettre l'observation par un oeil seulement de la totalité de la largeur de l'écran de visualisation, le système comportant en outre des moyens pour commander le changement de position de ladite image virtuelle de la fenêtre dans ledit plan de manière synchrone avec le changement d'image visualisée.

2. - Système pour la visualisation d'images stéréoscopiques et panoramiques selon la revendication 1, **caractérisé en ce que** lesdites images animées sont formées de couples d'images droites et gauches.

3. - Système pour la visualisation d'images stéréoscopiques et panoramiques selon la revendication 1 ou 2, **caractérisé en ce qu'**il comporte au moins deux sources de lumière blanche éclairant le support, chacune activant la formation de l'une des fenêtres

4. - Système pour la visualisation d'images stéréoscopiques et panoramiques selon la revendication 1 ou 2, **caractérisé en ce que** le moyen de masquage est constitué par un écran holographique appliqué sur écran de visualisation, tel qu'un écran cathodique, LCD, CCD ou autre.

5. - Système pour la visualisation d'images stéréoscopiques et panoramiques selon la revendication 1 ou 2, **caractérisé en ce que** le moyen de masquage est constitué par un support holographique, autre qu'argentique.

6. - Système pour la visualisation d'images stéréoscopiques et panoramiques selon la revendication 1 ou 2, **caractérisé en ce que** le moyen de masquage est constitué par un système utilisant un balayage transversal de l'éclairage d'une plaque holographique afin de permettre un déplacement synchronisé d'une fenêtre optique frontale.

7. - Système pour la visualisation d'images stéréoscopiques et panoramiques selon la revendication 1 ou 2, **caractérisé en ce que** le moyen de masquage est constitué par un support holographique éclairé en transmission.

8. - Système pour la visualisation d'images stéréoscopiques et panoramiques selon la revendication 1 ou 2, **caractérisé en ce que** le moyen de masquage est constitué par un support holographique éclairé en réflexion.

9. - Système pour la visualisation d'images stéréoscopiques et panoramiques selon la revendication 1 ou 2, **caractérisé en ce que** le moyen de masquage est constitué par un support holographique formant une image holographique lumineuse.

10. - Système pour la visualisation d'images stéréoscopiques et panoramiques selon la revendication 1 ou 2, **caractérisé en ce que** le moyen de masquage est activé par un éclairage autre qu'une source blanche tel qu'un laser, une LED, des sources mono-chromatiques ou polychromatiques.

11. - Système pour la visualisation d'images stéréoscopiques et panoramiques selon la revendication 1 ou 2, **caractérisé en ce que** le moyen de masquage est activé par un système mécanique ou électronique de balayage d'une source lumineuse tel que des barrettes de lampes flash, des barrettes CCD utilisées comme obturateurs électroniques de lumière, des miroirs pivotants, ou des prismes tournants.

## Claims

1. A system for the visualization of stereoscopic and panoramic pictures, moving or not, comprising a display unit and means for sequentially masking said display unit so as to enable a selective view of said display unit by only one eye of the observer, **characterized in that** said masking means is constituted by a transparent support having at least one diffraction network which forms a virtual picture of an opaque mask having a transparent window perpendicular to the axis of observation and positioned in a plane parallel to the display unit, the width of the window and the position of the plane wherein said window is formed being determined to enable the observation, by only one eye, of the whole width of the visualization screen, said system further comprising means for controlling the change in the position of said virtual picture of the window in said plane, synchronously with the change in the visualized picture.

2. A system for the visualization of stereoscopic and panoramic pictures according to claim 1, **characterized in that** said moving pictures are constituted by pairs of right and left pictures.

3. A system for the visualization of stereoscopic and panoramic pictures according to claim 1 or 2, **characterized in that** it includes at least two sources of white light illuminating the support, each one activating the formation of one of the windows.

4. A system for the visualization of stereoscopic and panoramic pictures according to claim 1 or 2, **characterized in that** the masking means is constituted by a holographic display applied on a visual display unit such as a cathode ray tube, a LCD, CCD or another display unit.

5. A system for the visualization of stereoscopic and panoramic pictures according to claim 1 or 2, **characterized in that** the masking means is constituted by another holographic support than a silver one.

6. A system for the visualization of stereoscopic and panoramic pictures according to claim 1 or 2, **characterized in that** the masking means is constituted by a system using a transversal scanning of the illumination of a holographic plate in order to enable a synchronous motion of a front optical window.

7. A system for the visualization of stereoscopic and panoramic pictures according to claim 1 or 2, **characterized in that** the masking means is constituted by a holographic support illuminated by transmission.

8. A system for the visualization of stereoscopic and panoramic pictures according to claim 1 or 2, **characterized in that** the masking means is constituted by a holographic support illuminated by reflection.

9. A system for the visualization of stereoscopic and panoramic pictures according to claim 1 or 2, **characterized in that** the masking means is constituted by a holographic support forming a luminous holographic picture.

10. A system for the visualization of stereoscopic and panoramic pictures according to claim 1 or 2, **characterized in that** the masking means is actuated by another illumination than a white source, such as a laser, a LED, monochromatic or polychromatic sources.

11. A system for the visualization of stereoscopic and panoramic pictures according to claim 1 or 2, **characterized in that** the masking means is actuated by a mechanical or an electronic system for scanning a light source such as flash lamps straps, CCD straps used as electronic light shutter, pivoting mirrors or rotating prisms.

## Patentansprüche

1. System für die Sichtanzeige von stereoskopischen und Panoramabildern, bewegte oder Standbilder, das ein Display und ein Mittel zur sequentiellen Maskierung des Displays umfaßt, damit eine selektive Sichtung des Displays mit nur einem Auge eines Betrachters möglich ist, **dadurch gekennzeichnet, daß** das besagte Mittel zur Maskierung aus einem transparenten Träger gebildet wird, der mindestens ein optisches Gitter aufweist, das ein virtuelles Bild einer opaken Sichtabdeckung bildet, die ein transparentes Fenster aufweist, das senkrecht zur Betrachtungsachse steht und in einer parallel zum Display verlaufenden Ebene positioniert ist, wobei die Breite des Fensters und die Position der Ebene, in der das besagte Fenster gebildet wird, so bestimmt wird, daß die Betrachtung der gesamten Breite des Displays mit nur einem Auge möglich ist, wobei das System ferner Mittel zum Steuern der Änderung der Position des besagten virtuellen Bildes des Fensters in der besagten Ebene synchron mit dem Wechsel des gesichteten Bildes umfaßt.

2. System für die Sichtanzeige von stereoskopischen und Panoramabildern nach Anspruch 1, **dadurch gekennzeichnet, daß** die besagten bewegten Bilder aus Paaren mit rechten und linken Bildern gebildet werden.

3. System für die Sichtanzeige von stereoskopischen und Panoramabildern nach Anspruch 1 oder 2, **dadurch gekennzeichnet, daß** es mindestens zwei Quellen von weißem Licht umfaßt, das den Träger beleuchtet, wobei jede die Bildung eines der Fenster aktiviert.

4. System für die Sichtanzeige von stereoskopischen und Panoramabildern nach Anspruch 1 oder 2, **dadurch gekennzeichnet, daß** das Mittel zur Maskierung aus einem holographischen Schirm besteht, der auf das Display angewandt wird, wie zum Beispiel mit Kathodenstrahlröhre, LCD, CCD und andere.

5. System für die Sichtanzeige von stereoskopischen und Panoramabildern nach Anspruch 1 oder 2, **dadurch gekennzeichnet, daß** das Mittel zur Maskierung aus einem holographischen und keinem argentischen Träger besteht.

6. System für die Sichtanzeige von stereoskopischen und Panoramabildern nach Anspruch 1 oder 2, **dadurch gekennzeichnet, daß** das Mittel zur Maskierung aus einem System besteht, das eine Querabtastung der Beleuchtung einer holographischen Platte benutzt, damit die synchronisierte Verschiebung eines optischen frontalen Fensters möglich wird.

7. System für die Sichtanzeige von stereoskopischen und Panoramabildern nach Anspruch 1 oder 2, **dadurch gekennzeichnet, daß** das Mittel zur Maskierung aus einem holographischen Träger besteht, der bei Übertragung beleuchtet wird.

8. System für die Sichtanzeige von stereoskopischen und Panoramabildern nach Anspruch 1 oder 2, **dadurch gekennzeichnet, daß** das Mittel zur Maskierung aus einem holographischen Träger besteht, der bei Reflexion beleuchtet wird.

9. System für die Sichtanzeige von stereoskopischen und Panoramabildern nach Anspruch 1 oder 2, **dadurch gekennzeichnet, daß** das Mittel zur Maskierung aus einem holographischen Träger besteht, der ein holographisches Leuchtbild bildet.

10. System für die Sichtanzeige von stereoskopischen und Panoramabildern nach Anspruch 1 oder 2, **dadurch gekennzeichnet, daß** das Mittel zur Maskierung mit einer anderen Beleuchtung aktiviert wird als eine weiße Quelle wie zum Beispiel ein Laser, eine LED, monochromatische oder polychromatische Quellen.

11. System für die Sichtanzeige von stereoskopischen und Panoramabildern nach Anspruch 1 oder 2, **dadurch gekennzeichnet, daß** das Mittel zur Maskierung durch ein mechanisches oder elektronisches Abtastsystem einer Lichtquelle aktiviert wird, wie zum Beispiel Schienen mit Blitzlampen, Schienen mit CCD, die als elektronische Lichtblenden, schwenkende Spiegel oder drehende Prismen benutzt werden.
